# DEMANDE DE BREVET EUROPEEN

(11) **EP 0 622 693 A1**
(43) Date de publication de la demande: **02.11.1994**
(21) Numéro de dépôt: 94201446.5
(22) Date de dépôt: 10.05.1991
(51) Int. Cl.: G03G 15/00

(54) **Dispositif d'aide à la photocopie de livres**

(62) Demande divisionnaire de: 91401222.4
(71) Demandeur: Patinier, André, F-75015 Paris (FR)
(72) Inventeur: Patinier, André, F-75015 Paris (FR)

(57) **Abrégé**

L'invention consiste en une sorte de règle de matière transparente que l'on glisse sous un livre au moment de le photocopier. Cette règle de forme asymétrique comprend au sommet S'' un angle α aigu. Le dispositif comprend un pied de stabilité (8) qui se prolonge par une plaque (10) relativement épaisse et de longueur plus ou moins grande.

## Description

L'invention se rapporte au domaine de la vie quotidienne et plus particulièrement aux articles de bureau.

Il y a des cas où les livres sont écrits tellement près de leur fente centrale que la marge qui ne peut être reproduite autour de cette fente centrale par le procédé de la photocopie doit être réduite à rien.Or sur les dispositfs existants,tous à glisser sous la fente centrale du livre retourné ,en matière transparente,avec ou sans fibres optiques, et symètriques celà ne semble pas possible sauf à détériorer le livre,en le pressant fortement pour qu'il colle à la surface du dispositif,car celà l'écartelerais,ou bien une zone non lisible autour de la fente centrale, par l'objectif des machines à copier subsiste.

Il est cependant possible de réduire à rien la marge non lisible autour de la lente centrale du livre en supprimant toute zone non lisible par la photocopieuse,sur le dispositif lui -même et en permettant que le livre colle à la surface du dispositif au sommet de ce dernier,mais sans que le livre ne soit écartelé.

La solution est alors de sacrifier un côté du dispositif qui devient asymètrique.Une seule page du livre ne peut donc plus qu'être copiée à la fois.Toutefois la stabilité du dispositif est alors mise en cause et c'est pourquoi le dispositif est alors muni d'un pied de stabilité se formant par une courbe et se poursuivant ici par une partie plate d'épaisseur comprise entre 0,5 mm et 3 mm.

La description détaillée d'une variante de réalisation de l'invention se fera en se reportant à l'unique figure de cette demande figure qui représente le dispositif vu de profil.

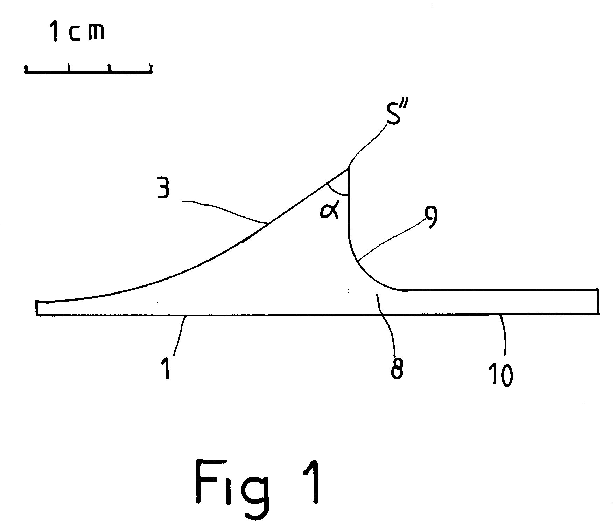

Sur la figure 1 on peut constater que l'angle α est le complément de l'angle d'inclinaison de la face supérieure (3) par raport à l'horizontale,au moins au sommet S'',et que le pied de stabilité (8) se forme par la courbe (9),et que le pied de stabilité (8) se prolonge ensuite par la plaque (10).

## Revendications

1. Dispositif d'aide à la photocopie de livres constitué d'au moins une masse de matière transparente,de profil asymètrique, comprenant un pied de stabilité (8),caractérisé en ce que ledit pied de stabilité se prolonge par une plaque (10).
